**Europäisches Patentamt**

**European Patent Office**

**Office européen des brevets**

(11) Veröffentlichungsnummer: **0 356 635**
**A2**

(12) **EUROPÄISCHE PATENTANMELDUNG**

(21) Anmeldenummer: **89110633.8**

(22) Anmeldetag: **12.06.89**

(51) Int. Cl.⁵: **B04C 5/14 , B65G 65/42 , B65G 65/44**

(30) Priorität: **31.08.88 DE 3829565**

(43) Veröffentlichungstag der Anmeldung:
**07.03.90 Patentblatt 90/10**

(84) Benannte Vertragsstaaten:
**AT CH DE ES FR GB IT LI SE**

(71) Anmelder: **Krämer, Erich**
**Hüllreuthstrasse 18**
**D-8626 Michelau(DE)**

(72) Erfinder: **Krämer, Erich**
**Hüllreuthstrasse 18**
**D-8626 Michelau(DE)**

(74) Vertreter: **Leyh, Hans, Dr.-Ing.**
**Patentanwälte Berendt, Leyh & Hering Innere**
**Wiener Strasse 20**
**D-8000 München 80(DE)**

(54) **Austragvorrichtung.**

(57) Die Erfindung betrifft eine Austragvorrichtung
zum Austragen eines pulverförmigen Materials insbesondere aus Zyklonen, in denen überschüssiges
Pulver aus Pulverbeschichtungsanlagen rückgewonnen wird. Die Vorrichtung ist mit einer Fördereinrichtung versehen, die wenigstens eine Aufnahmekammer für das auszutragende pulverförmige Material
hat, und die von einer Einlaßöffnung zu einer Auslaßöffnung bewegbar ist. Die Einlaßöffnung und die
Auslaßöffnung sind räumlich so voneinander getrennt ausgebildet, daß während des Betriebes nur
sehr geringe Mengen an Fremdluft über die Austragvorrichtung in den Zyklon eintreten kann, so daß
dessen Saugleistung praktisch nicht beeinträchtigt
wird.

Fig.1

EP 0 356 635 A2

## Austragvorrichtung

Die Erfindung betrifft eine Austragvorrichtung zum Austragen von im wesentlichen pulverförmigem Material, insbesondere aus Zyklonen, in denen pulverförmiges Material aus Pulverbeschichtungsanlagen rückgewonnen wird.

Beim Pulverbeschichten von Gegenständen in Pulverbeschichtungskabinen wird das überschüssige Pulver aus den Kabinen abgesaugt und wiederverwendet. Das Pulver-Luft-Gemisch wird hierbei aus den Kabinen in einen oder mehrere Zyklone geleitet, in welchen das Pulver abgeschieden wird und nach unten sinkt, wo es z.B. in einen fahrbaren Behälter, einen sogenannten Pulverwagen, augetragen wird.

Es ist nun bereits vorgeschlagen worden, solche Zyklone im Wechselbetrieb zu betreiben, d.h. es sind z.B. zwei Zyklone (oder Zyklongruppen) an eine Pulverbeschichtungskabine angeschlossen, wobei dann jeweils ein Zyklon (oder eine Zyklongruppe) das überschüssige Pulver aus der Kabine ansaugt, während aus dem anderen Zyklon (oder der anderen Zyklongruppe) das angesaugte Pulver, das sich im unteren Bereich des Zyklons angesammelt hat, aus diesem ausgetragen wird. Während dieser Zeitspanne, in der das Pulver ausgetragen wird, wird die Ansaugung unterbrochen, z.B. durch Trennen des Ansaugkanales von dem Ansauggebläse mittels einer Klappe.

Um nun das Ansaugen von überschüssigem Pulver aus der oder den Pulverbeschichtungskabinen während des Austrags des Pulvers aus den Zyklonen nicht unterbrechen zu müssen, wurde ferner vorgeschlagen, am unteren Ende der Zyklone ein Wechselventil einzubauen, das die Zufuhrseite vom Zyklon her schließt, wenn die Abfuhrseite zum Pulverwagen hin geöffnet ist und umgekehrt.

Hierdurch soll vermieden werden, daß während des Austragens des Pulvers aus dem unteren Ende der Zyklone Fremdluft in die Zyklone eintritt, was zur Folge hat, daß die Ansaugleistung sinkt oder möglicherweise ganz zusammenbricht, wenn der Zyklon zuviel Fremdluft ansaugt. Besonders nachteilig hierbei ist, daß beim Ansaugen von Fremdluft Pulver aus dem unteren Endbereich des Zyklons, das ausgetragen werden soll in den Zyklon rückgesaugt und dann in die Atmosphäre ausgetragen wird.

Dies ist bereits wegen des Pulververlustes unerwünscht und darüber hinaus wegen der Reinhaltung der Luft meist nicht zulässig.

Der Erfindung liegt daher die Aufgabe zugrunde, eine Austragvorrichtung der eingangs genannten Art so auszubilden, daß beim Austragen des Pulvers möglichst wenig Fremdluft in den Zyklon rückströmen kann.

Nach der Erfindung wird dies dadurch erreicht, daß die am Austragende des Zyklons angeflanschte Austragvorrichtung eine mit wenigstens einer Aufnahmekammer versehene Fördereinrichtung aufweist, die aus einer Aufnahmeposition unterhalb des Austragendes des Zyklons in eine Abgabeposition, in der das aufgenommene Pulver abgegeben wird, hin- und zurückbewegbar ist.

Die Fördereinrichtung ist zweckmäßigerweise in einem Gehäuse, das eine Einlaßöffnung und eine Auslaßöffnung aufweist, beweglich gelagert.

Vorzugsweise ist die Fördereinrichtung ein in einem Führungsrohr hin-und herverschiebbarer Kolben, der mit einer Durchgangsbohrung quer zu seiner Längsachse versehen ist, wobei die Auslaßöffnung axial versetzt zur Einlaßöffnung angeordnet und die Durchgangsbohrung unter die Einlaßöffnung und über die Auslaßöffnung und zurück verschiebbar ist.

Die Auslaßöffnung ist in Umfangsrichtung zweckmäßigerweise um im wesentlichen 180° gegen die Einlaßöffnung versetzt.

Nach einer weiteren Ausführungsform der Erfindung ist die Fördereinrichtung in Form einer Walze ausgebildet, die im Gehäuse um eine im wesentlichen horizontale Achse drehbar gelagert ist, wobei die Auslaßöffnung in Umfangs richtung versetzt zur Einlaßöffnung angeordnet ist.

Die Aufnahmekammer für das abzuführende Pulver kann hierbei in Form einer Sackbohrung quer zur Achse der Walze ausgebildet sein, oder es kann die Aufnahmekammer die Form einer Durchgangsbohrung haben, die durch eine Zwischenwand in zwei Teilkammern unterteilt ist, die dann in Umfangsrichtung um 180° zueinander versetzt sind.

Die Sackbohrung bzw. die beiden Teilkammern können dann aus einer Aufnahmeposition unterhalb der Auslaßöffnung des Zyklons in eine Abgabeposition, in der das Pulver ausgetragen wird, und zurück gedreht werden.

Die Auslaßöffnung kann im Gehäuse um etwa 135-180° versetzt zur Einlaßöffnung ausgebildet sein.

Nach einer weiteren Ausführungsform der Erfindung ist die Fördereinrichtung in Form einer im Gehäuse um eine im wesentlichen horozontale Achse drehbar gelagerten Kugel ausgebildet, die mit einer Sackbohrung versehen ist, die aus einer Aufnahmeposition unter der Einlaßöffnung des Gehäuses in eine Abgabeposition über der Auslaßöffnung des Gehäuses drehbar ist.

Die Auslaßöffnung ist hierbei zweckmäßigerweise im wesentlichen um etwa 180° versetzt zur

Einlaßöffnung angeordnet. Nach noch einer weiteren Ausgestaltung der Erfindung ist die Fördereinrichtung, z.B. die Walze oder die Kugel, an ihrem Umfang mit einer Mehrzahl von in Form von Sackbohrungen ausgebildeten Aufnahmekammern für das abzuführende Pulver versehen. Schließlich kann die Fördereinrichtung auch in Form eines Zahnriemens ausgebildet sein.

Diese Sackbohrungen liegen hierbei in einer Querebene der Fördereinrichtung und haben gleiche Winkelabstände in Umfangsrichtung.

Zwischen der jeweiligen Fördereinrichtung und dem Gehäuse sind geeignete Dichtungen, insbesondere O-Ring-Dirchtungen eingebaut.

Die Fördereinrichtungen können periodisch oder kontinuierlich betätigt werden, wobei insbesondere die als Walze, Kugel oder Zahnriemen ausgebildeten Fördereinrichtungen ggf. kontinuierlich umlaufen können.

Beispielsweise Ausführungsformen der Erfindung werden nachfolgend anhand der Zeichnung erläutert, in der

Fig. 1-3 schematisch im Schnitt verschiedene Ausführungsformen der erfindungsgemäßen Austragvorrichtung zeigen.

Fig. 4 zeigt schematisch eine Modifizierung der Fördereinrichtung, wie sie in den Fig. 2 und 3 verwendet wird.

Fig. 5 zeigt einen Längsschnitt durch eine weitere Ausführungsform der erfindungsgemäßen Austragvorrichtung.

Fig. 6 zeigt schematisch eine Draufsicht auf die Vorrichtung nach Fig. 5.

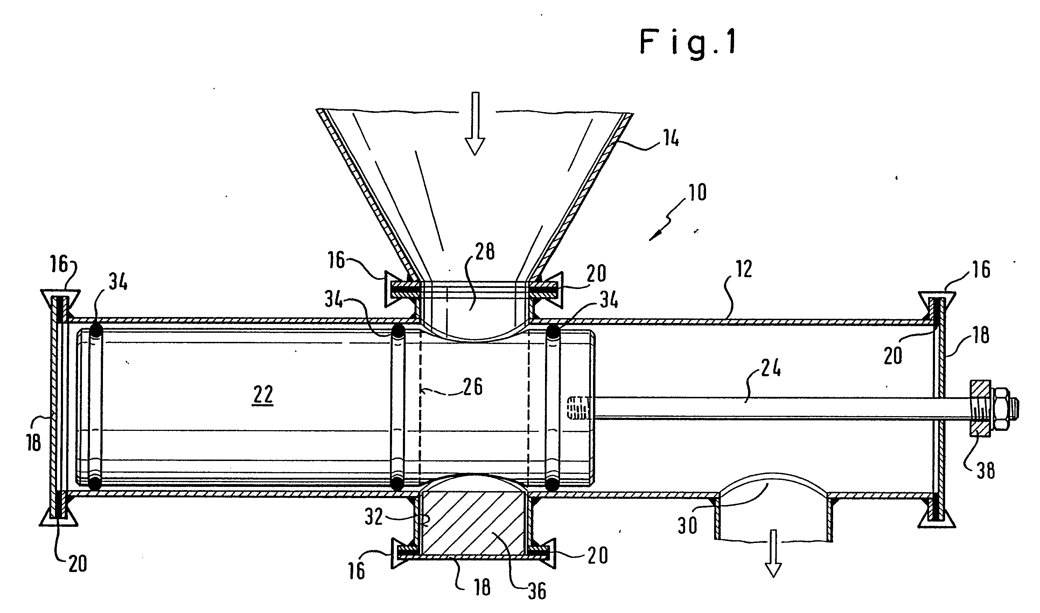

Die Austragvorrichtung 10 nach Fig. 1 hat ein Gehäuse 12, das hier die Gestalt eines zylindrischen Führungsrohres hat, das an das Austragsende eines Zyklons 14 angeflanscht ist , z.B. mittels eines Schnellspannverschlusses 16. Die Längsachse des Führungsrohres verläuft hierbei praktisch quer zur Längsachse des Zyklons und in der Regel horizontal.

Das Führungsrohr ist an seinen Stirnseiten durch je einen Verschlußdeckel 18 geschlossen, die ebenfalls durch Schnellspannverschlüsse 16 mit dem Führungsrohr verbunden sein können, wobei zwischen dem letzteren und den Verschlußdeckeln jeweils eine Dichtung 20, z.B. eine Flachdichtung, eingelegt ist.

In dem Führungsrohr bzw. Gehäuse 12 ist ein Kolben 22 axial hin- und herverschiebbar angeordnet. Mit dem Kolben 22 ist eine Kolbenstange 24 fest aber leicht lösbar verbunden, z.B. verschraubt, die durch eine entsprechende Öffnung im rechten Verschlußteil 18 hindurch nach außen geführt ist. Der Kolben 22 kann mittels eines nichtdargestellten Pneumatikzylinders im Gehäuse 12 hin- und herbewegt werden. Ein solcher Pneumatikzylinder kann beispielsweise direkt am Gehäuse 12 befestigt sein, wobei dann seine Längsachse parallel zur Längsachse des Gehäuses 12 verläuft und sein Kolben bzw. seine Kolbenstange kann mit der Kolbenstange 24 z.B. mittels eines Trägers oder einer Lasche 38 fest verbunden sein.

Der Kolben 22 ist mit einer Durchgangsbohrung 26 versehen und das Gehäuse 12 hat eine Einlaßöffnung 28 sowie eine axial zu dieser versetzt angeordnete Auslaßöffnung 30. Die Auslaßöffnung 30 ist ferner relativ zur Einlaßöffnung 28 in Umfangsrichtung um 180° versetzt.

Das Gehäuse 12 kann ferner, wie dargestellt, gegenüber der Einlaßöffnung 28 noch eine Anschlußöffnung 32 haben, die ebenfalls durch einen Verschlußdeckel 18 mit Schnellspannverschluß 16 geschlossen ist.

Um zu verhindern, daß Pulver in die Anschlußöffnung 32 fällt, ist ein Einlegestück oder ein Stopfen 36 in die Anschlußöffnung 32 eingelegt, der an seinem oberen Ende bündig mit der Innenwand des Führungsrohres 12 abschließt. Beidseits der Durchgangsbohrung 26 und am linken Ende des Kolbens 22 sind Dichtungsringe, z.B. O-Ringe, in entsprechende Ringnuten im Kolben 22 eingelegt, die den Kolben gegen das Gehäuse 12 abdichten. Gegebenenfalls können zusätzlich zu den O-Ringen noch z.B. Lippenringe vorgesehen werden.

Die Austragvorrichtung nach Fig. 1 arbeitet wie folgt.

Die Einlaßöffnung 28 des Gehäuses 12 liegt unmittelbar unter der Auslaßöffnung des Zyklons 14. In der in Fig. 1 dargestellten einen Endstellung des Kolbens 22 befindet sich ferner die Durchgangsbohrung 26 des Kolbens direkt unter dem Auslaß des Zyklons 14 (und der Einlaßöffnung des Gehäuses 12), so daß Pulver, das sich im unteren Ende des Zyklons 14 ansammelt, in die Durchgangsbohrung 26 fällt und diese sukzessive auffüllt. Sobald das Volumen der Bohrung 26 gefüllt ist (oder auch schon vorher),wird mittels des nichtdargestellten Pneumatikzylinders der Kolben 22 nach rechts in Fig. 1 bewegt bis die Durchgangsbohrung 26 über die Auslaßöffnung 30 zu liegen kommt, worauf das Pulver aus der Bohrung 26 nach unten durch die Auslaßöffnung 30 hindurch, z.B. in einen Pulverwagen fallen kann. Der Hub des Kolbens 22 entspricht somit dem axialen Abstand der beiden Mittelachsen von Einlaßöffnung 28 und Auslaßöffnung 30. Ist die Bohrung 26 geleert, so wird der Kolben 22 wieder in seine in Fig. 1 dargestellte Füllposition zurückgefahren und der ganze Vorgang beginnt von neuem.

Der Kolben kann periodisch hin- und herbewegt werden, z.B. immer dann, wenn die Bohrung 26 mit Pulver gefüllt ist oder auch kontinuierlich, d.h. unabhängig davon, ob diese Bohrung 26 jeweils ganz gefüllt ist.

Es kann ferner vorgesehen werden, am unteren Ende des Zyklons 14 oberhalb seiner Auslaßöffnung einen Schieber anzubringen, der immer erst dann geöffnet wird, sobald sich die Bohrung 26 des Kolbens 22 unterhalb der Auslaßöffnung des Zyklons befindet.

Im linken Deckel 18 kann zweckmäßigerweise eine Ent- bzw. Belüftungsöffnung vorgesehen werden, um die Bildung eines Luftpolsters zwischen dem Deckel 18 und der Stirnwand des Kolbens 22 zu vermeiden.

Die in Fig. 1 dargestellte Vorrichtung ermöglicht es, das sich im Zyklon 14 ansammelnde pulverförmige Material aus dem Zyklon auszutragen, ohne daß die Ansaugung unterbrochen wird, da keine Verbindung zwischen der Auslaßöffnung 30 des Gehäuses 12 und der Auslaßöffnung des Zyklons 14 besteht. Es kann daher keine Fremdluft aus der Auslaßöffnung 30 in den Zyklon 14 eintreten. Nur die kleine Luftmenge, die sich in der Sackbohrung 26 des Kolbens 22 befindet, nachdem das Pulver durch die Auslaßöffnung 30 hindurch entleert worden ist, und der Kolben wieder in seine Ausgangsposition nach Fig. 1 zurückgefahren worden ist, kann in den Zyklon 14 eindringen. Diese Luftmenge ist aber sehr klein im Verhältnis zum Volumen des Zyklons 14, denn der Kolben 22 kann beispielsweise einen Durchmesser von 100 mm und die Durchgangsbohrung 26 kann beispielsweise einen Durchmesser von 60mm haben.

Diese Luftmenge ist zu klein, um irgendwelche Auswirkungen auf den Unterdruck im Zyklon und damit auf dessen Ansaugleistung zu haben.

Aus Gründen der Übersichtlichkeit ist der Außendurchmesser des Kolbens 22 kleiner dargestellt als der Innendurchmesser des Führungsrohres 12, in der Praxis ist der Durchmesserunterschied jedoch wesentlich geringer, d.h. der Kolben läuft praktisch mit Gleitsitz im Führungsrohr. Ferner ist Vorsorge getroffen, daß der Kolben 22 sich während des Betriebes nicht um seine Längsachse drehen kann, beispielsweise durch eine Vierkantverbindung zwischen der Kolbenstange 24 und der Lasche 38. Die Länge des Kolbens 22 ist so gewählt, daß auch dann, wenn sich die Durchgangsbohrung 26 des Kolbens 22 über der Auslaßöffnung 30 des Gehäuses 12 befindet, die Einlaßöffnung 28 des Gehäuses 12 und damit die mit dieser fluchtenden Auslaßöffnung des Zyklons 14 durch den in der Figur linken Teil des Kolbens 22 geschlossen bzw. gesperrt ist, so daß während des Kolbenkubes kein Pulver aus dem Zyklon austreten kann.

Die in Fig. 1 dargestellte Vorrichtung hat eine sehr niedrige Bauhöhe, sie ist leicht zu reinigen und auszublasen, da hierzu nur die Deckel 18 abzunehmen sind, worauf der Kolben vollständig herausgezogen werden kann. Darüber hinaus kann auch der die Anschlußöffnung 32 verschließende Deckel 18 abgenommen werden und von dort her die Vorrichtung gereinigt und ausgeblasen werden.

In der Praxis können mehrere Zyklone oder mehrere Austragvorrichtungen nach Fig. 1 kombiniert werden, etwa derart, daß vier Zyklone im Viereck aufgestellt sind und die Kolben 22 auf ein gemeinsames Zentrum zu fördern, so daß das aus den Zyklonen auszutragende pulverförmige Material in einen gemeinsamen Pulverbehälter oder Pulverwagen abgeführt werden kann.

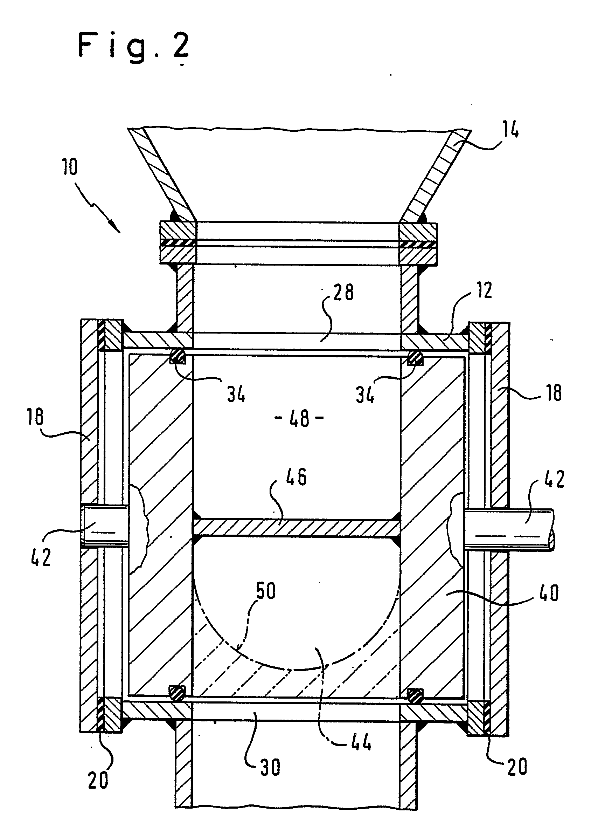

Fig. 2 zeigt eine weitere Ausführungsform der Erfindung, bei der die Austragvorrichtung eine Walze 40 aufweist, die im Gehäuse 12 bzw. den Verschlußdeckeln 18 drehbar gelagert ist. Die Walze 40 ist hierzu mit Lagerzapfen 42 versehen, von denen einer durch den entsprechenden Deckel 18 nach außen geführt und mit einer Antriebseinrichtung, z.B. einem geeigneten Motor, gekoppelt ist.

Die Walze 40 ist ebenso wie der Kolben 22 nach Fig. 1 mit einer Aufnahmekammer versehen zur Aufnahme des pulverförmigen Materials, das sich im unteren Ende des Zyklons 14 ansammelt.

In Fig. 2 sind zwei Ausführungsformen einer solchen Aufnahmekammer dargestellt.

Bei der einen Ausführungsform ist die Walze 40 mit einer Sackbohrung 44 versehen, die in der Fig. 2 von oben nach unten verläuft und deren unteres Ende durch einen Boden oder eine Wand 50 der Walze 40 begrenzt ist. Bei dieser Ausführungsform ist die in Fig. 2 dargestellte Zwischenwand 46 nicht vorhanden.

Bei der anderen Ausführungsform ist die Walze 40 mit einer Durchgangsbohrung versehen, welche in der Mitte durch die Zwischenwand 46 in zwei Teilkammern oder Teilbohrungen 48 unterteilt ist.

Das Gehäuse ist,wie bei Fig. 1, mit einer Einlaßöffnung 28 versehen, die unmittelbar unter der Auslaßöffnung des Zyklons 14 liegt, sowie mit einer Auslaßöffnung 30, die in derselben Querebene wie die Einlaßöffnung 28 liegt, relativ zu dieser jedoch in Umfangsrichtung um z.B. 180° versetzt ist. Dies ist aber nicht unbedingt erforderlich, denn das Pulver kann auch bereits bei einem Neigungswinkel von z.B. 45° ausgetragen werden, d.h. die Auslaßöffnung 30 kann zur Einlaßöffnung 28 auch um einen Winkel von 135° oder einen Winkel zwischen 135° und 180° versetzt sein.

Die Austragvorrichtung nach Fig. 2 arbeitet wie folgt.

Ist die Walze 40 mit einer Sackbohrung 44 versehen, so wird die Walze 40 so gedreht, daß ihre Einlaßöffnung 28 direkt unter der Auslaßöffnung des Zyklons 14 liegt, worauf die Bohrung 44 mit dem aus dem Zyklon 14 herab fließenden Pulver gefüllt wird. Die Walze 40 wird dann gedreht bis die Einlaßseite der Bohrung 44 gegenüber der Auslaßöffnung 30 im Gehäuse 12 zu liegen kommt, worauf das Pulver aus der Bohrung oder Kammer 44 durch die Auslaßöffnung 30 hindurch ausgetragen wird und beispielsweise in einen Pulverbehälter fällt. Die Walze 40 wird dann wieder in ihre in Fig. 2 gezeigte Ausgangsposition zurückgedreht oder in gleicher Drehrichtung weitergedreht.

Bei der Ausführungsform mit zwei Teilkammern 48 befindet sich die eine Teilkammer 48 unter dem Auslaß des Zyklons 14, während sich die andere Teilkammer 48 über der Auslaßöffnung 30 des Gehäuses 12 befindet. (In diesem Fall sind zweckmäßigerweise die Einlaßöffnung 28 und die Auslaßöffnung 30 des Gehäuses 12 um 180° relativ zueinander versetzt).

Bei dieser Ausführungsform wird somit die eine Teilkammer 48 gefüllt und gleichzeitig die andere Teilkammer 48 geleert. Nachdem dies geschehen ist, wird die Walze um 180° gedreht, worauf die eben gefüllte Teilkammer 48 geleert und die eben geleerte Teilkammer 48 gefüllt wird und so fort.

Auch hier kann die Walze periodisch oder auch kontinuierlich betrieben werden.

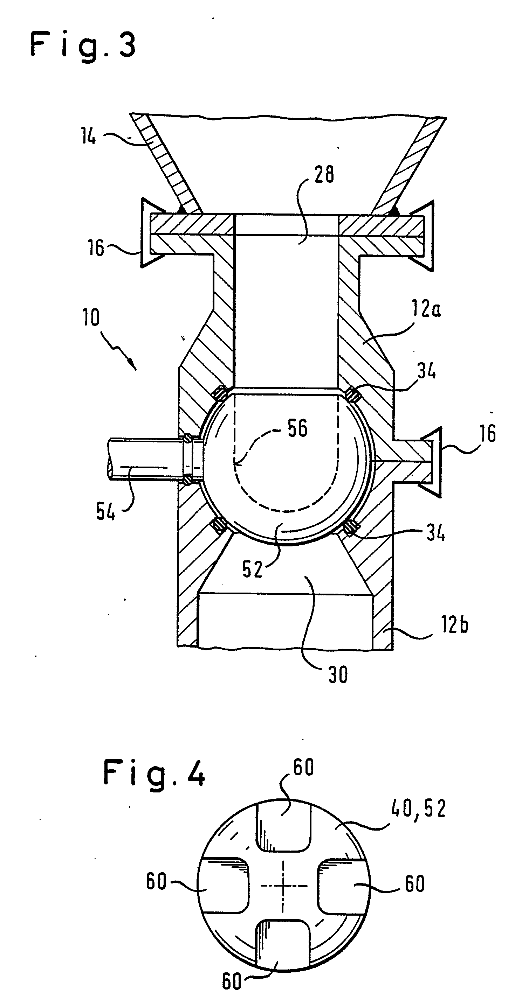

Fig. 3 zeigt eine Variante der Ausführungsform nach Fig. 2. Die Austragvorrichtung 10 ist hier mit einer Fördereinrichtung in Form eine Kugel 52 versehen, die mit einer aus dem Gehäuse herausgeführten Welle 54 fest verbunden ist, welche mittels eines Motors angetrieben werden kann. Das Gehäuse ist zweigeteilt ausgebildet und besteht aus einem Oberteil 12a und einem Unterteil 12b, die geeignet z.B. durch Schnellspannverschlüsse 16 miteinander verbunden sind. Die Kugel 52 hat eine Sackbohrung 56, welche die Aufnahmekammer für das auszutragende pulverförmige Material bildet. Das Gehäuse hat wiederum eine Einlaßöffnung 28 unterhalb der Auslaßöffnung des Zyklons 14 und eine Auslaßöffnung 30, die in derselben Querebene wie die Einlaßöffnung 28 liegt, relativ zu dieser in Umfangsrichtung aber um einen Winkel von 135-180° versetzt ist.

Die Arbeitsweise der Ausführungsform nach Fig. 4 ist dieselbe wie bei derjenigen nach Fig. 3, d.h. in der in Fig.1 dargestellten Position liegt die Bohrung 56 mit ihrer Eingangsseite direkt unter der Einlaßöffnung 28, so daß aus dem Zyklon 14 das Pulver in die Bohrung oder Aufnahmekammer 56 eintreten oder hineinfallen kann. Ist die Aufnahmekammer 56 gefüllt (oder auch schon vorher), so wird die Kugel 52 gedreht, bis die Bohrung 56 gegenüber der Auslaßöffnung 30 zu liegen kommt, worauf das auszutragende Pulver aus der Sackbohrung 56 durch die Auslaßöffnung 30 hindurch z.B. in einen Pulverbehälter ausgetragen wird. Die Kugel 42 wird dann wieder in ihre in Fig. 3 gezeigte Ausgangsposition zurück oder weitergeschwenkt.

Die Kugel 52 kann periodisch oder auch kontinuierlich angetrieben werden. Anstelle einer Aufnahmekammer oder zwei Teilkammern, wie in Fig.2 dargestellt, kann die Fördereinrichtung, d.h. die Walze 40 nach Fig. 2 oder die Kugel 52 nach Fig. 3 mit mehreren Aufnahmekammern 60 in Form von Sackbohrungen versehen sein, wie Fig. 4 schematisch zeigt. In dieser Figur sind vier Aufnahmekammern 60 dargestellt, die in Umfangsrichtung gleiche Winkelabstände haben und in einer Ebene liegen, es kann selbstverständlich aber auch eine größere Anzahl von Aufnahmekammern 60 vorgesehen werden.

Bei Verwendung einer größeren Anzahl von Aufnahmekammern wird die zugehörige Fördereinrichtung, d.h. die Walze 40 oder die Kugel 52 zweckmäßigerweise kontinuierlich angetrieben.

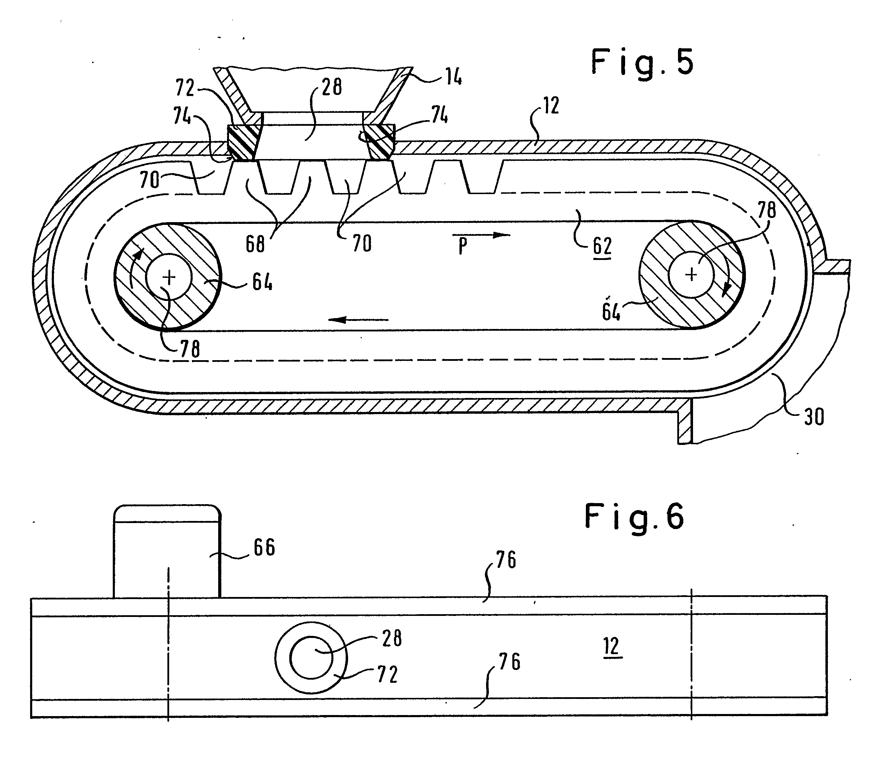

Die Fig. 5 und 6 zeigen eine weitere Ausführungsform der erfindungsgemäßen Austragvorrichtung. Bei dieser Ausführungsform ist die Fördereinrichtung in Form eines Zahnriemens 62 ausgebildet, der über Riemenscheiben 64 läuft, von denen eine, die linke in Fig. 5, von einem Motor 66 antreibbar ist.

Der Zahnriemen 62 hat Zähne 68 und entsprechend zwischen den Zähnen liegende Taschen oder Zahnlücken 70, welche die Aufnahmekammern für das aus dem Zyklon 14 auszutragende pulverförmige Material bilden.

Die Riemenscheiben 64 und der Zahnriemen 62 sind im Gehäuse 12 untergebracht, das an seinen beiden Seiten durch Abdeckplatten 76 geschlossen ist. Die beiden Abdeckplatten 76 sind mit dem Gehäuse 12 in geeigneter, jedoch nicht näher dargestellter Weise fest verbunden, z.B. durch Schrauben oder durch Schnellverschlüsse, so daß wenigstens eine der Abdeckplatten 76 schnell vom Gehäuse 12, z.B. zu Reinigungszwecken, abgenommen werden kann.

Die Riemenscheiben sitzen auf Achswellen 78, die in den Abdeckplatten 76 geeignet gelagert sein können. Hierbei ist die rechte Achswelle 78 zweckmäßigerweise fest im Gehäuse gelagert und die rechte Riemenscheibe 64 ist drehbar relativ zu ihrer Achswelle 78, während zweckmäßigerweise über die in Fig. 5 linke Achswelle 78 das Drehmoment vom Motor 66 auf die linke Riemenscheibe 64 übertragen wird.

Die Drehrichtung der Riemenscheiben 64 ist durch Pfeile dargestellt. Wenn die linke Riemenscheibe 64 durch den Motor 66 angetrieben wird, so wird der Zahnriemen 62 in Richtung des Pfeiles P von links nach rechts in Fig. 5 unter der Einlaßöffnung 28 des Gehäuses 12 , die mit der Auslaßöffnung des Zyklons 14 fluchtet, vorbeigeführt, wobei das sich im unteren Endbereich des Zyklons 14 sammelnde pulverförmige Material in die Taschen bzw. Zahnlücken 70 zwischen den Zähnen 68 des Zahnriemens 62 fällt.

Der Zahnriemen 62 transportiert dann das in den Zahnlücken 70 befindliche Pulver weiter, das, sobald der Zahnriemen 62 um die rechte Riemenscheibe 64 umgelenkt wird, aus den Zahnlücken 70 herausfällt und durch die Auslaßöffnung 30 ausgetragen wird, die im Gehäuse 12 im Bereich der rechten Riemenscheibe 64 schräg unterhalb dieser ausgebildet ist.

In die Einlaßöffnung 28 des Gehäuses 12, wie insbesondere Fig. 5 zeigt, ist ein Dichtring 72 eingesetzt, dessen Innendurchmesser wenigstens gleich dem Durchmesser der Auslaßöffnung des Zyklons 14 ist.

Der Dichtring 72 steht einwärts über die Innenwand des Gehäuses 12 etwas vor und die Kanten oder Ränder zwischen seiner inneren Stirnfläche und seiner inneren und äußeren Umfangsfläche sind jeweils mit einer Fase 74 versehen.

Der Dichtring 72 kann auch etwas über die äußere Wand des Gehäuses 12 überstehen, wie Fig. 5 zeigt.

An seinem Außenumfang dichtet der Dichtring 72 somit gegenüber dem Gehäuse 12 ab, mit seiner äußeren oberen Stirnfläche dichtet er gegenüber dem unteren Ende des Zyklons 14 ab und mit seiner inneren Stirnfläche dichtet er ab gegen die Stirnflächen der Zähne 68 des Zahnriemens 62.

An den Seiten sind die Taschen oder Zahnlücken 70 durch die Innenflächen der Abdeckplatten 76 im wesentlichen abgedichtet, wobei die letzteren zweckmäßig aus einem geeigneten Kunststoffmaterial bestehen.

Die seitliche Dichtung zwischen dem Zahnriemen 62 und den Innenflächen der Abdeckplatten 76 wird durch eine relativ enge Toleranz erzielt, womit bereits eine recht gute Dichtwirkung erreicht wird. Gegebenenfalls kann aber auch eine Dichtleiste oder eine Lippendichtung zwischen den Innenflächen der Abdeckplatten 76 und den Seitenflächen des Zahnriemens 62 vorgesehen werden.

Die vorbeschriebene Vorrichtung ermöglicht es, das im Zyklon 14 rückgewonnene pulverförmige Material kontinuierlich auszutragen ohne die Gefahr, daß zuviel Fremdluft in den Zyklon von seinem Austragende her eingesaugt wird, da praktisch nur das Luftvolumen der unter der Auslaßöffnung des Zyklons 14 vorbeilaufenden Zahnlücken 70 in den Zyklon eintreten kann. Dieses Luftvolumen ist aber klein im Verhältnis zum Volumen des Zyklons, so daß dessen Saugleistung hierdurch praktisch nicht beeinträchtigt wird.

Die Vorrichtung kann an die verschiedenen örtlichen Gegebenheiten angepaßt werden, da der Achsabstand der beiden Riemenscheiben 64 und damit auch die Länge des Zahnriemens 62 je nach den Bedürfnissen frei gewählt werden kann.

Die Vorrichtung läßt sich auch schnell und einfach reinigen, da zu diesem Zweck nur eine der Abdeckplatten 76 abzunehmen ist, worauf der Zahnriemen 62 von den Rollen abgezogen werden kann, worauf das Gehäuse mit Einlaß- und Auslaßöffnung, Dichtung, Zahnriemen und Riemenscheiben ausgeblasen und dann wieder zusammengebaut werden kann.

## Ansprüche

1. Austragvorrichtung zum Austragen eines im wesentlichen pulverförmigen Materials insbesondere aus Zyklonen, in denen überschüssiges Pulver aus Pulverbeschichtungsanlagen rückgewonnen wird, dadurch gekennzeichnet, daß die am Austragende des Zyklons (14) angeflanschte Austragvorrichtung (10) eine mit wenigstens einer Aufnahmekammer versehene Fördereinrichtung (22, 40, 52, 62) aufweist, die aus einer Einlaßposition unterhalb des Austragendes des Zyklons (14) in eine Auslaßposition und zurück bewegbar ist, in der das aufgenommene Pulver abgegeben wird.

2. Vorrichtung nach Anspruch 1, dadurch gekennzeichnet, daß die Fördereinrichtung (22, 40, 52, 62) in einem Gehäuse (12) beweglich gelagert ist, das eine Einlaßöffnung (28) und eine Auslaßöffnung (30) aufweist.

3. Vorrichtung nach Anspruch 1 oder 2, dadurch gekennzeichnet, daß die Fördereinrichtung einen in einem Führungsrohr hin- und herverschiebbaren Kolben (22) aufweist, der mit einer die Aufnahmekammer bildenden Durchgangsbohrung (26) quer zu seiner Längsachse versehen ist, daß ferner die Auslaßöffnung (30) axial versetzt zur Einlaßbohrung (28) angeordnet und die Durchgangsbohrung (26) im Kolben (22) unter die Einlaßöffnung (28) und über die Auslaßöffnung (30) und zurück verschiebbar ist.

4. Vorrichtung nach Anspruch 2 oder 3, dadurch gekennzeichnet, daß die Auslaßöffnung (30) in Umfangsrichtung um 180° gegen die Einlaßöffnung (28) versetzt ist.

5. Vorrichtung nach Anspruch 1k dadurch gekennzeichnet, daß die Fördereinrichtung eine Walze (40) aufweist, die im Gehäuse (12) um eine im wesentlichen horizontale Achse drehbar gelagert ist.

6. Vorrichtung nach Anspruch 5, dadurch gekennzeichnet, daß die Aufnahmekammer für das auszutragende Pulver in Form einer Sackbohrung (44) quer zur Achse der Walze (40) ausgebildet ist.

7. Vorrichtung nach Anspruch 5, dadurch gekennzeichnet, daß die Aufnahmekammer in Form einer Durchgangsbohrung quer zur Achse der Walze (40) ausgebildet ist, die durch eine Zwischenwand (46) in zwei Teilkammern (48) unterteilt ist.

8. Vorrichtung nach Anspruch 1, dadurch gekennzeichnet, daß die Fördereinrichtung eine im Gehäuse (12) um eine im wesentlichen horizontale Achse drehbare Kugel (52) aufweist, die mit einer Sackbohrung (56)versehen ist.

9. Vorrichtung nach einem der Ansprüche 5-8, dadurch gekennzeichnet, daß im Gehäuse (12) die Auslaßöffnung (30) um etwa 135° bis 180° zur Einlaßöffnung (28) in Umfangsrichtung versetzt ist, und daß die Aufnahmekammern für das auszutragende Pulver aus einer Aufnahmeposition unter der Einlaßöffnung (28) des Gehäuses in eine Abgabeposition gegenüber der Auslaßöffnung (30)des Gehäuses drehbar sind und umgekehrt.

10. Vorrichtung nach einem der Ansprüche 5-9, dadurch gekennzeichnet, daß die Fördereinrichtung (40, 52) an ihrem Umfang mit einer Mehrzahl von Aufnahmekammern (60) versehen ist.

11. Vorrichtung nach Anspruch 10, dadurch gekennzeichnet, daß die Aufnahmekammern (60) in einer Ebene der Fördereinrichtung (40, 52) liegen und in Umfangsrichtung gleiche Winkelabstände haben.

12. Vorrichtung nach einem der vorhergehenden Ansprüche, dadurch gekennzeichnet, daß zwischen der Fördereinrichtung (22, 40, 52) und dem Gehäuse (12) Dichtungen, insbesondere O-Ring-Dichtungen (34) eingebaut sind.

13. Austragvorrichtung nach Anspruch 1, dadurch gekennzeichnet, daß die Fördereinrichtung in Form eines Zahnriemens (62) ausgebildet ist, der unter der Einlaßöffnung (28) und im wesentlichen über der Auslaßöffnung (30) des Gehäuses (12) vorbeiführbar ist, und dessen Zahnlücken (70) die Aufnahmekammern für das auszutragende pulverförmige Material bilden.

14. Vorrichtung nach Anspruch 13, dadurch gekennzeichnet, daß in der Einlaßöffnung (28) des Gehäuses (12) ein Dichtring (72) eingesetzt ist, durch den der Bereich zwischen dem Zahnriemen (62) und dem Austragende des Zyklons (14) abdichtbar ist.

15. Vorrichtung nach Anspruch 14, dadurch gekennzeichnet, daß der Dichtring (72) über die Außenfläche und über die Innenfläche des Gehäuses (12) jeweils übersteht.

16. Vorrichtung nach Anspruch 14 oder 15, dadurch gekennzeichnet, daß der Dichtring (72) an seinen dem Zahnriemen (62) zugewandten Rändern mit Fasen (74) versehen ist.

17. Vorrichtung nach einem der Ansprüche 14-16, dadurch gekennzeichnet, daß der Dichtring (72) mit seiner Umfangsfläche gegen das Gehäuse (12), mit seiner äußeren Stirnfläche gegen den Zyklon (14) und mit seiner inneren Stirnfläche gegen die Stirnflächen der Zähne (68) des Zahnriemens (62) abdichtet.

18. Vorrichtung nach einem der Ansprüche 13-17, dadurch gekennzeichnet, daß die Zahnlücken (70) des Zahnriemens (62) seitlich durch am Gehäuse (12) befestigte Abdeckplatten (76) im wesentlichen abgedichtet sind.

19. Vorrichtung nach einem der Ansprüche 14-18, dadurch gekennzeichnet, daß der Außendurchmesser des Dichtringes (72) etwas kleiner ist als die Breite des Zahnriemens (62).

# Fig.1

EP 0 356 635 A2

# Fig. 2

# Fig.3

# Fig.4

# Fig.5

# Fig.6

EP 0 356 635 A2